# EUROPEAN PATENT APPLICATION

(11) **EP 4 475 549 A1**
(43) Date of publication of application: **11.12.2024**
(21) Application number: 23749611.2
(22) Date of filing: 25.01.2023
(51) Int. Cl.: H04N 23/60, G06T 7/00, H04N 23/73, H04N 23/76

(54) **INFORMATION PROCESSING DEVICE, INFORMATION PROCESSING METHOD, AND PROGRAM**

(30) Priority: 01.02.2022 JP 2022014379
(71) Applicant: Sony Group Corporation, Tokyo 108-0075 (JP)
(72) Inventor: OTSUKA, Junji, Tokyo 108-0075 (JP); IRIE, Atsushi, Tokyo 108-0075 (JP); YOSHIMURA, Masakazu, Tokyo 108-0075 (JP)
(74) Representative: MFG Patentanwälte Meyer-Wildhagen Meggle-Freund Gerhard PartG mbB
(86) International application number: PCT/JP2023/002210
(87) International publication number: WO 2023/149295

(57) **Abstract**

An information processing apparatus according to an embodiment of the present technology includes a generation unit, an evaluation unit, and an update unit. The generation unit generates input data on the basis of a predetermined parameter. The evaluation unit generates evaluation data on the basis of first output data that includes evaluation target data and is output by inputting first input data generated by the generation unit to a first recognition model, and second output data that includes a pseudo label as a pseudo correct answer of the evaluation target data and is output by inputting second input data generated by the generation unit to a second recognition model. The update unit updates the predetermined parameter on the basis of the evaluation data.

## Description

### Technical Field

The present technology relates to an information processing apparatus, an information processing method, and a program that are applicable to image recognition or the like.

### Background Art

Patent Literature 1 describes a recognition apparatus in which features are hierarchically extracted from data acquired from a sensor, a result of recognition for the data is acquired on the basis of a result of the extraction, and an acquiring condition of the data from the sensor is controlled on the basis of the result of the extraction. This allows robust recognition with respect to data (paragraphs [0012] to [0036] of the specification, Figs. 1 to 3, etc. of Patent Literature 1).

### Citation List

### Patent Literature

Patent Literature 1: Japanese Patent Application Laid-open No. 2021-81790

### Disclosure of Invention

### Technical Problem

In such a device or the like that needs image sensing, there is a demand for a technology capable of achieving an improvement in recognition accuracy.

In view of the circumstances as described above, it is an object of the present technology to provide an information processing apparatus, an information processing method, and a program that are capable of achieving an improvement in recognition accuracy.

### Solution to Problem

In order to achieve the object described above, an information processing apparatus according to one embodiment of the present technology includes a generation unit, an evaluation unit, and an update unit.

The generation unit generates input data on the basis of a predetermined parameter.

The evaluation unit generates evaluation data on the basis of first output data that includes evaluation target data and is output by inputting first input data generated by the generation unit to a first recognition model, and second output data that includes a pseudo label as a pseudo correct answer of the evaluation target data and is output by inputting second input data generated by the generation unit to a second recognition model.

The update unit updates the predetermined parameter on the basis of the evaluation data.

The predetermined parameter may include a parameter relating to sensing and a parameter relating to processing of a sensing result.

The update unit may update at least one of the parameter relating to sensing or the parameter relating to processing of a sensing result.

The evaluation data may include an error between the evaluation target data and the pseudo label or an accuracy of the first output data based on the pseudo label.

The update unit may update at least one of the parameter relating to sensing or the parameter relating to processing of a sensing result to reduce the error.

The update unit may update at least one of the parameter relating to sensing or the parameter relating to processing of a sensing result to increase the accuracy.

The generation unit may include a sensing unit and an image processing unit. In this case, the sensing unit may include a complementary metal-oxide semiconductor (CMOS) image sensor or a time-of-flight (ToF) sensor. The image processing unit may include an image signal processor (ISP) that performs image processing on a signal output from the sensing unit.

The parameter relating to sensing may include at least one of an exposure time period or an analog gain.

The parameter relating to processing of a sensing result may be a control parameter relating to the ISP. In this case, the control parameter may include at least one parameter of demosaicing, filter processing, resolution conversion, digital gain, tone mapping, color correction, color conversion, normalization processing, quantization, binning processing, blur restoration, or high dynamic range (HDR) rendering.

The information processing apparatus may further include a database that stores a RAW image. The generation unit may generate the input data with respect to the RAW image on the basis of the predetermined parameter. The evaluation unit may generate the evaluation data on the basis of third output data that includes the evaluation target data and is output by inputting the input data to the first recognition model, and fourth output data that includes the pseudo label and is output by inputting the RAW image or the input data to the second recognition model.

The evaluation data may include an error between the evaluation target data and the pseudo label or an accuracy of the first output data based on the pseudo label. In this case, the update unit may update the predetermined parameter such that the error or the number of times of update of the predetermined parameter falls within a predetermined threshold.

The evaluation unit may generate the evaluation data on the basis of fifth output data that includes the evaluation target data and is output by inputting image data imaged at a certain time to the first recognition model, and sixth output data that includes the pseudo label and is output by inputting image data imaged at a time earlier than the certain time to the second recognition model.

The input data may include image data and speech data. In this case, the first recognition model may be an image recognition model. The second recognition model may be a speech recognition model.

The input data may include image data and speech data. In this case, the first recognition model may be a speech recognition model, and the second recognition model may be an image recognition model.

An information processing method according to one embodiment of the present technology is an information processing method that is executed by a computer system, the method including: generating input data on the basis of a predetermined parameter; generating evaluation data on the basis of first output data that includes evaluation target data and is output by inputting first input data generated by the generation unit to a first recognition model, and second output data that includes a pseudo label as a pseudo correct answer of the evaluation target data and is output by inputting second input data generated by the generation unit to a second recognition model; and updating the predetermined parameter on the basis of the evaluation data.

A program according to one embodiment of the present technology causes a computer system to execute: generating input data on the basis of a predetermined parameter; generating evaluation data on the basis of first output data that includes evaluation target data and is output by inputting first input data generated by the generation unit to a first recognition model, and second output data that includes a pseudo label as a pseudo correct answer of the evaluation target data and is output by inputting second input data generated by the generation unit to a second recognition model; and updating the predetermined parameter on the basis of the evaluation data.

### Brief Description of Drawings

[Fig. 1] Fig. 1 is a block diagram showing a configuration example of an information processing apparatus.
[Fig. 2] Fig. 2 is a diagram schematically showing a flow of updating a sensing parameter and an ISP parameter.
[Fig. 3] Fig. 3 is a diagram schematically showing a flow of a pattern in which a RAW image is obtained.
[Fig. 4] Fig. 4 is a diagram schematically showing a flow of a pattern in which a RAW image is not obtained.
[Fig. 5] Fig. 5 is a diagram schematically showing another flow of updating parameters.
[Fig. 6] Fig. 6 is a diagram schematically showing a flow of pseudo labeling based on another modality.
[Fig. 7] Fig. 7 is an image diagram of update of the sensing parameter and the ISP parameter.
[Fig. 8] Fig. 8 is a block diagram showing another configuration example of an information processing apparatus.
[Fig. 9] Fig. 9 is a block diagram showing another configuration example of an information processing apparatus.
[Fig. 10] Fig. 10 is a block diagram showing another configuration example of an information processing apparatus.
[Fig. 11] Fig. 11 is a schematic diagram showing a practical example of an image recognition system in a multi-camera.
[Fig. 12] Fig. 12 is a block diagram showing a configuration example of an information processing apparatus.
[Fig. 13] Fig. 13 is a diagram schematically showing a flow of updating the sensing parameter and the ISP parameter.
[Fig. 14] Fig. 14 is a diagram schematically showing a flow of updating the sensing parameter and the ISP parameter when a subject is in an overlapping region.
[Fig. 15] Fig. 15 is a diagram schematically showing a flow of updating the sensing parameter and the ISP parameter when the subject is in a non-overlapping region.
[Fig. 16] Fig. 16 is a block diagram showing a hardware configuration example of the information processing apparatus.

### Mode(s) for Carrying Out the Invention

Hereinafter, embodiments according to the present technology will be described with reference to the drawings.

### [Configuration of Information Processing Apparatus]

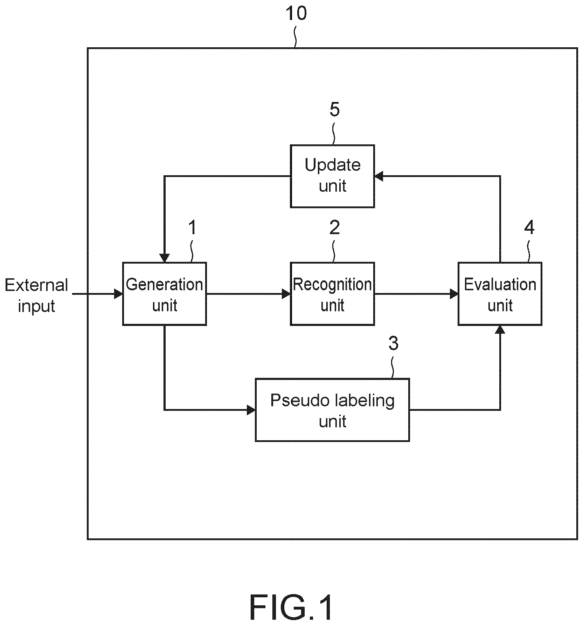

Fig. 1 is a block diagram showing a configuration example of an information processing apparatus 10 according to the present technology.

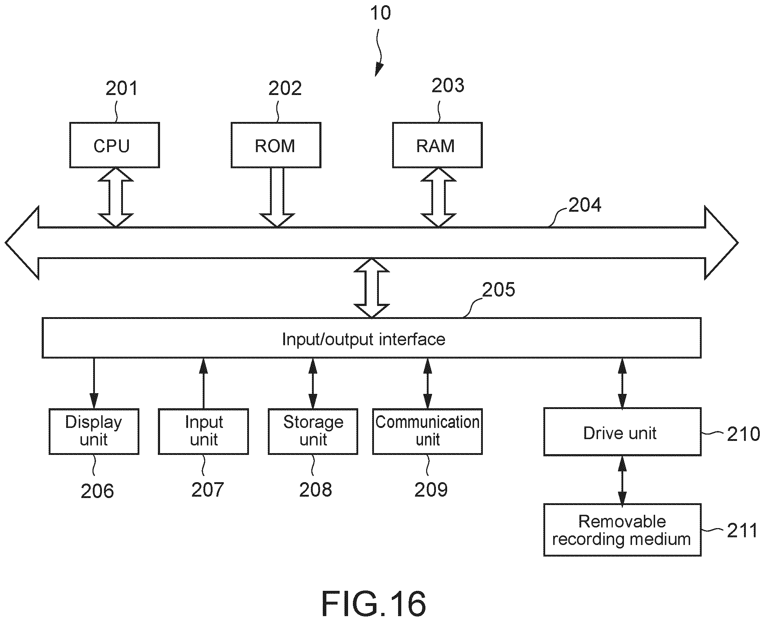

The information processing apparatus 10 includes hardware necessary for the configuration of a computer, such as a central processing unit (CPU), a read-only memory (ROM), a random-access memory (RAM), and a hard disk drive (HDD) (see Fig. 16). The CPU loads a program according to the present technology, which is recorded in advance on the ROM or the like, to the RAM and executes the program, so that functional blocks exemplified in Fig. 1 are implemented, and an information processing method according to the present technology is executed.

For example, it is possible to implement the information processing apparatus 10 by any computer such as a personal computer (PC). As a matter of course, hardware such as a field programmable gate array (FPGA) or an application specific integrated circuit (ASIC) may be used. Further, in order to implement each functional block shown in Fig. 1, dedicated hardware such as an integrated circuit (IC) may be used.

The program is installed on the information processing apparatus 10, for example, via various recording media. Alternatively, the program may be installed via the Internet or the like. Note that the type or the like of recording media on which programs are recorded is not limited, and any computer-readable recording media may be used. For example, any recording media that records data in a non-transitory manner may be used.

For example, the information processing apparatus 10 is employed for devices that need image sensing, e.g., mobile objects such as a vehicle and a drone, portable terminals such as a smartphone, augmented reality (AR) glasses or a head mounted display (HMD), a stationary game, a smart camera, and a monitoring camera. For example, the information processing apparatus 10 may be mounted on the device described above or may be disposed on the outside of a device connected via wires or wirelessly.

As shown in Fig. 1, the information processing apparatus 10 includes a generation unit 1, a recognition unit 2, a pseudo labeling unit 3, an evaluation unit 4, and an update unit 5.

The generation unit 1 generates input data with respect to an external input on the basis of a predetermined parameter. In this embodiment, the generation unit 1 includes a sensing unit and an image processing unit. For example, a complementary metal-oxide semiconductor (CMOS) image sensor, a time-of-flight (ToF) sensor, or the like is used for the sensing unit.

For the image processing unit, an image signal processor (ISP) that performs various types of filter processing such as demosaicing, sharpening processing, and denoising, resolution conversion, digital gain, tone mapping (gray level correction), color correction, color conversion, normalization processing, quantization, binning processing, blur restoration, and high dynamic range (HDR) rendering is used.

Note that the combination or order regarding the processing of the image processing unit may be appropriately optimized. Further, any signal processing may be used for the ISP. Further, part or all of the image processing unit may be represented by a machine learning model such as a convolutional neural network (CNN).

The predetermined parameter includes a parameter regarding sensing (hereinafter, referred to as sensing parameter) and a parameter regarding processing of a sensing result. In this embodiment, the sensing parameter includes an exposure time period and an analog gain.

Further, in this embodiment, the parameter regarding processing of a sensing result is a control parameter regarding the ISP (hereinafter, referred to as ISP parameter). For example, the ISP parameter includes at least one parameter of various types of filter processing such as demosaicing, sharpening processing, and denoising, resolution conversion, digital gain, tone mapping (gray level correction), color correction, color conversion, normalization processing, quantization, binning processing, blur restoration, or HDR rendering.

Further, the ISP parameter includes combinations of algorithms including whether to select an algorithm itself or to apply an algorithm, and adjustment of that parameter, in each type of processing described above. Further, how the parameter is updated is determined in accordance with the characteristics of a recognition model and errors.

The input data generated by the generation unit 1 is supplied to the recognition unit 2 and the pseudo labeling unit 3. In this embodiment, the input data is image data including a RAW image or the like.

The recognition unit 2 includes a recognition model, and when the input data is input thereto, outputs first output data including evaluation target data. The first output data that has been output is supplied to the evaluation unit 4.

The pseudo labeling unit 3 outputs, when the input data is input thereto, second output data including a pseudo label that is a pseudo correct answer of the evaluation target data. The second output data that has been output is supplied to the evaluation unit 4. Hereinafter, to output the output data including the pseudo label will be referred to as pseudo labeling.

Note that the pseudo labeling method is not limited. Geometric transformation such as shift, scaling, and rotation, and a plurality of augmentations such as inversion (flip), noise addition, gain, blur, and color conversion may be applied to the input data to determine a pseudo label on the basis of statistics of the results thereof. Further, for example, Dropout may be applied to a recognizer a plurality of times to determine a pseudo label on the basis of statistics of the outputs thereof.

The evaluation unit 4 generates evaluation data on the basis of the first output data and the second output data. In this embodiment, the evaluation unit 4 evaluates the first output data output from the recognition unit 2 on the basis of the pseudo label, and generates evaluation data including an error between the evaluation target data and the pseudo label, and accuracy of the first output data of the recognition unit 2 when the pseudo label is assumed as a correct answer. The evaluation data that has been output is supplied to the update unit 5.

Note that the first output data is not limited to the recognition result of the recognition unit 2 and may also be a combination of an intermediate feature amount, a recognition result, and an intermediate feature amount. Further, the second output data may include a plurality of pseudo labels for one piece of first output data. In other words, a plurality of pieces of second output data for one piece of first output data may be input to the evaluation unit 4.

Note that the input data input to the recognition unit 2 (first input data) and the input data input to the pseudo labeling unit 3 (second input data) may be different from each other.

Further, a recognition model used in the pseudo labeling unit 3 and a recognition model used in the recognition unit 2 may be different from each other. For example, the recognition model used in the pseudo labeling unit 3 may be a model obtained by copying the recognition model used in the recognition unit 2. Further, a recognition model different from that of the recognition unit 2, such as a highly-accurate recognition model, may be used to perform pseudo labeling.

Further, in the case of updating the recognition model on the basis of the pseudo label, when the parameter of the recognition model is updated a plurality of times, a model of a parameter obtained by exponential moving average (EMA) using the parameter of the latest model and the parameter of a past model may be used as a model for pseudo labeling. Thus, the parameter for pseudo labeling is less likely to be affected by the noise of the pseudo label, and the learning is stably performed.

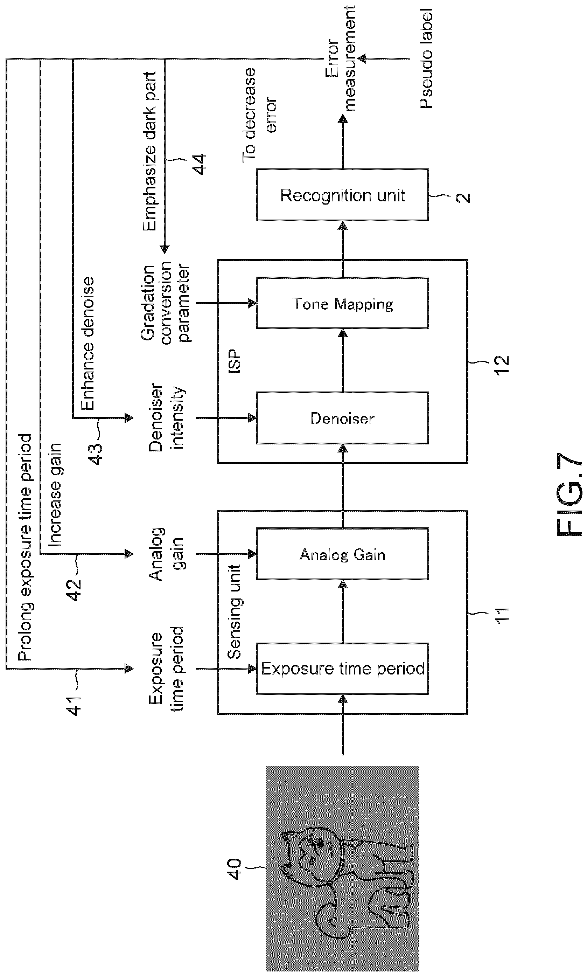

The update unit 5 updates the predetermined parameter of the generation unit 1 on the basis of the evaluation data output by the evaluation unit 4. In this embodiment, the update unit 5 updates at least one of the sensing parameter or the ISP parameter so as to reduce the error or increase the accuracy on the basis of the evaluation data. Further, the update unit 5 supplies the updated predetermined parameter to the generation unit 1. The examples of updating the parameter will be described later with reference to Fig. 7.

Note that a plurality of pieces of evaluation data may be input to the update unit 5. Further, data other than the evaluation data may be input to the update unit 5 in accordance with the method of updating the parameter. Further, the update unit 5 may update the predetermined parameter on the basis of the plurality of pieces of evaluation data corresponding to a plurality of pieces of input data. Further, the update unit 5 may update the recognition model of the recognition unit 2. For example, a model in which EMA is applied to the parameters of the latest model and the past model may also be used.

Note that, in this embodiment, the generation unit 1 corresponds to a generation unit that generates input data on the basis of a predetermined parameter.

Note that, in this embodiment, the recognition unit 2 corresponds to a first recognition model that outputs first output data including evaluation target data by inputting first input data generated by the generation unit.

Note that, in this embodiment, the pseudo labeling unit 3 corresponds to a second recognition model that outputs second output data including a pseudo label as a pseudo correct answer of the evaluation target data by inputting second input data generated by the generation unit.

Note that, in this embodiment, the evaluation unit 4 corresponds to an evaluation unit that generates evaluation data on the basis of the first output data that includes the evaluation target data and is output by inputting the first input data generated by the generation unit to the first recognition model, and the second output data that includes a pseudo label as a pseudo correct answer of the evaluation target data and is output by inputting the second input data generated by the generation unit to the second recognition model.

Note that, in this embodiment, the update unit 5 corresponds to a update unit that updates the predetermined parameter on the basis of the evaluation data.

### [Update of Parameters]

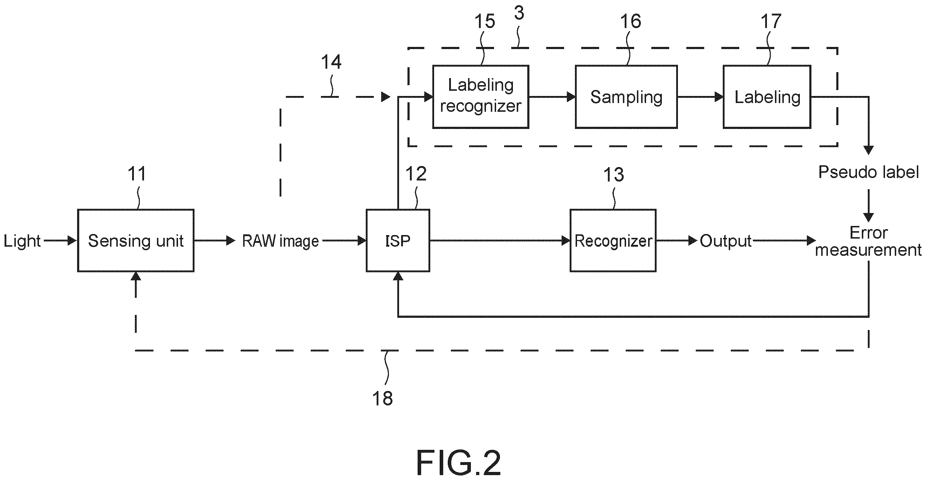

Fig. 2 is a diagram schematically showing a flow of updating the sensing parameter and the ISP parameter.

As shown in Fig. 2, a sensing unit 11 acquires light and generates a RAW image. The generated RAW image is supplied to an ISP 12 (image processing unit).

The ISP 12 performs image processing on the RAW image generated by the sensing unit 11. In this embodiment, the image data (input data) subjected to the image processing performed by the ISP 12 is supplied to a recognizer 13 (recognition unit) and the pseudo labeling unit 3.

Note that, for the image data supplied to the pseudo labeling unit 3, the RAW image may be used without interposing the ISP 12 (dotted line 14). Further, the RAW image may not be subjected to the image processing performed by the ISP 12.

The recognizer 13 outputs the output data with respect to the image data that has been input. Note that the recognizer is not limited, and a recognizer used for various types of image recognition such as person identification, person detection, object detection, image classification, key point estimation, posture estimation, and segmentation is applied.

With respect to the image data that has been input, the pseudo labeling unit 3 performs sampling 16 on the output data that has been output from the labeling recognizer 15 and then performs labeling 17 thereon, thus outputting a pseudo label. For example, the data having a high degree of reliability or likelihood may be selected from the output data, and the selected data may be used as it is, so that a pseudo label is output, or a pseudo label may be output from a result obtained by integrating a plurality of reasoning results by averaging or the like.

Note that the sampling 16 or the labeling 17 is not limited. In the case of a classification problem, any method such as a one-hot vector conversion in which only an output in a category having the highest likelihood is set to 1 and the others are set to 0 may be used. Further, a mean value, a median value, a variance, a maximum value, and the like may be used between the labeling recognizer 15 and the sampling 16. For example, whether to perform labeling may be determined on the basis of variations in output data or a maximum value of likelihood. Further, for example, statistics may be collected again while excluding outliers on the basis of the variations in output data or the maximum value to determine a final label.

The evaluation unit 4 evaluates the output data on the basis of the output pseudo label and performs error measurement. On the basis of the measured error output by the evaluation unit 4, the update unit updates the ISP parameter so as to reduce that error.

Further, if simulation of sensing or online learning is performed, the update unit 5 updates the sensing parameter so as to reduce the error (dotted line 18).

Note that the method of updating the predetermined parameter is not limited. For example, if a model of sensor control or the ISP is differentiable, a gradient method may be used. Further, if the differentiation is not applicable, another optimization method such as an evolutionary computation method or a parameter search technique may be used. Further, the sensing parameter and the recognition model may be alternately or simultaneously updated.

According to the flow described above, sensing and image processing are optimized on the basis of the pseudo label that is a pseudo correct answer generated by the pseudo labeling. In this embodiment, a pattern in which a RAW image is obtained and a pattern in which a RAW image is not obtained are assumed.

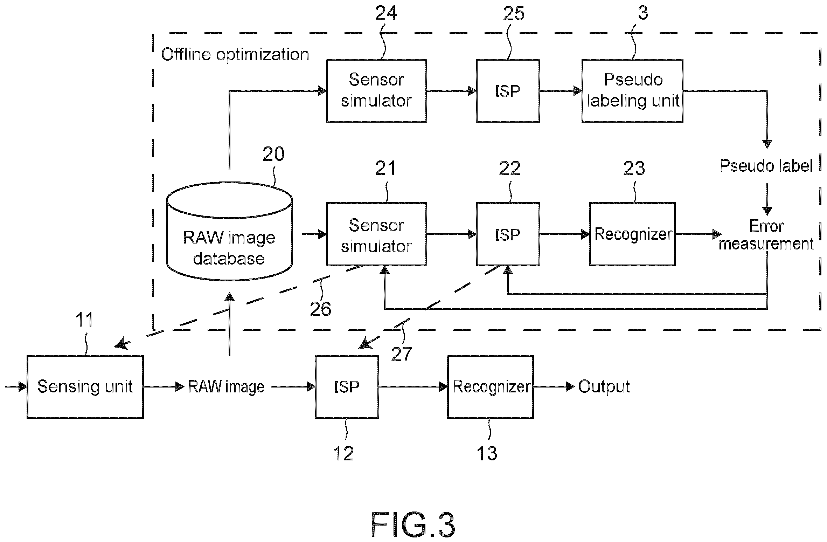

Fig. 3 is a diagram schematically showing a flow of a pattern in which a RAW image is obtained.

As shown in Fig. 3, a RAW image acquired by the sensing unit 11 is stored in a RAW image database 20.

A sensor simulator 21 performs simulation of a sensor, in which a predetermined exposure time period and a predetermined analog gain are assumed, on the stored RAW image, and generates image data obtained by that simulation.

An ISP 22 performs image processing using a predetermined ISP parameter on the image data generated by the sensor simulator 21.

A recognizer 23 outputs output data by using the image data subjected to the image processing as input data.

Similarly, the pseudo labeling unit 3 outputs a pseudo label by using the data, which is obtained when an ISP 25 performs image processing on the image data generated by the sensor simulator 24, as input data.

The evaluation unit 4 evaluates the output data on the basis of the output pseudo label and performs error measurement. On the basis of the measured error output by the evaluation unit 4, the update unit 5 updates the sensing parameter and the ISP parameter so as to reduce that error.

The update of the parameters described above is repeated until the following condition is satisfied: the error falls below a predetermined threshold (allowable range), the number of times of update of the parameters reaches a predetermined number of times, or the error is eliminated. The sensing parameter and the ISP parameter are optimized by the repetition. Further, the optimized sensing parameter is supplied to the sensing unit 11 (dotted line 26). Further, the optimized ISP parameter is supplied to the ISP 12 (dotted line 27).

In other words, in the pattern in which the RAW image is obtained, the ISP parameter can be updated for the same image many times, so that an image can be generated. This makes it possible to accumulate RAW images to allow offline optimization. Further, a simulation using a sensor model allows learning of sensor control. Further, pseudo modeling can be performed using a model that inputs a RAW image in which the amount of information is not reduced, so that high-accuracy labeling can be made possible.

Note that, for the input data input to the pseudo labeling unit 3, a RAW image may be input without interposing the sensor simulator 24 and the ISP 25.

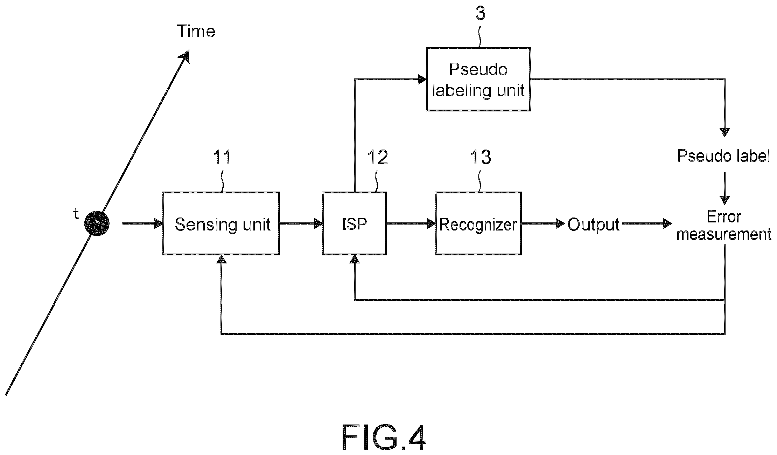

Fig. 4 is a diagram schematically showing a flow of a pattern in which a RAW image is not obtained.

As shown in Fig. 4, the ISP 12 performs image processing on image data at a certain time t acquired by the sensing unit 11. In other words, the generation unit (sensing unit 11 and ISP 12) generates input data on the basis of a predetermined parameter at a certain time t. Further, the generated input data is supplied to the recognizer 13 and the pseudo labeling unit 3.

The evaluation unit 4 evaluates the output data output by the recognizer 13 on the basis of the pseudo label output by the pseudo labeling unit 3 and performs error measurement. On the basis of the measured error output by the evaluation unit 4, the update unit 5 updates the ISP parameter and the sensing parameter so as to reduce that error.

As descried above, in the pattern in which a RAW image is not obtained, the update of the ISP parameter can be performed only once for one image. In other words, one-time online optimization per image is performed.

Note that the timing at which the update of the parameter is performed is not limited, and the update of the parameter may be performed such that a plurality of pieces of image data is accumulated and errors are reduced for a plurality of images thereof. Further, even if a RAW image is obtained, the online optimization shown in Fig. 4 may be performed.

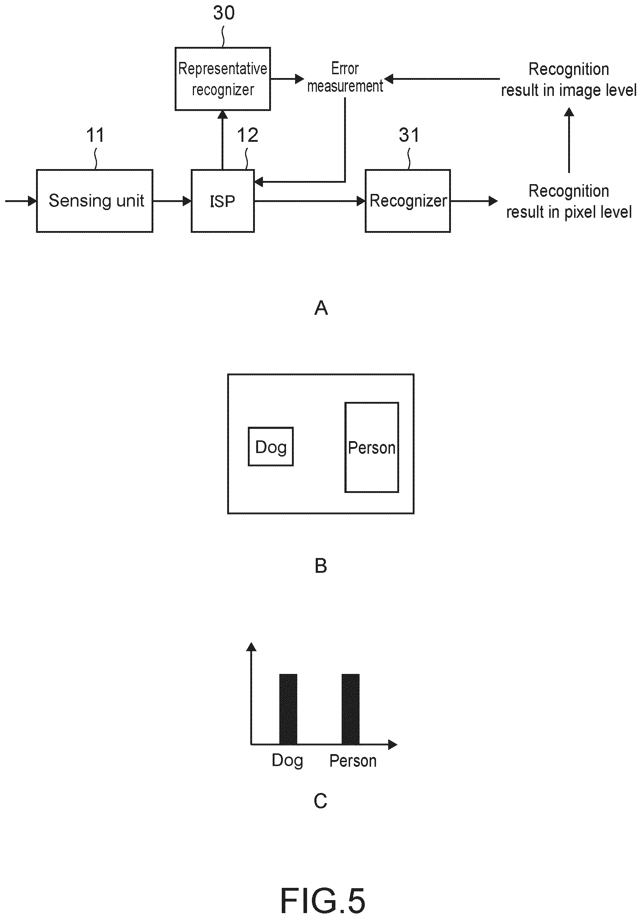

Fig. 5 is a diagram schematically showing another flow of updating parameters. B of Fig. 5 is a schematic diagram showing a recognition result in a pixel level of an image. C of Fig. 5 is a schematic diagram showing a recognition result in an image level.

A of Fig. 5 shows a flow for updating an ISP parameter of the current frame in real time by a pseudo label. For example, if a heavy model is used to output a pseudo label, update the ISP parameter, and newly perform recognition, there is a possibility that real-time processing fails to catch up with the above.

In the case as described above, in this embodiment, a recognition result of a recognizer 31, which has been output in the previous frame, is used. Further, in the recognizer 31, weakly supervised learning is used in order to correspond to the movement of a subject. Further, in a representative recognizer 30, another light recognition model is used for updating the parameter.

As shown in Fig. 5, the ISP 12 performs image processing on image data at a certain time t, which has been acquired by the sensing unit 11. The generated input image at the time t is supplied to the representative recognizer 30.

The recognizer 31 outputs a recognition result in a pixel level at a time (t-1). For example, as shown in B of Fig. 5, the recognizer 31 recognizes that the subject in the image at the time (t-1) is a dog and a person and the positions of the dog and the person. Further, as shown in C of Fig. 5, in order to perform weakly supervised learning, the recognizer 31 changes the recognition result into a coarse granularity representing that there are a dog and a person in the image.

In other words, the recognizer 31 with a large amount of calculation outputs a pseudo label in which the output at the time (t-1) is changed to the image level. This makes it possible to suppress the influence of a displacement in position of the subject between the time (t-1) and the time t.

The light representative recognizer 30 outputs the output data in the image level at the time t by inputting the input image at the time t.

The evaluation unit 4 evaluates the output data output by the representative recognizer 30 on the basis of the pseudo label output by recognizer 31 and performs error measurement.

On the basis of the measured error output by the evaluation unit 4, the update unit 5 updates the ISP parameter such that an error between the output of the representative recognizer 30 at the time t and the pseudo label is reduced. In other words, the update unit 5 updates a predetermined parameter on the basis of a recognition result in coarse units such as classification in units of image.

In Fig. 5, the RAW image at the time t is saved in the sensor, an image is generated again with the updated ISP parameter, and a result processed by the recognizer 31 is assumed as an output at the time t. Accordingly, a total of two-time recognition, i.e., one time for a light representative model and one time for a heavy model, are performed for each frame, so that the amount of calculation is made lighter as compared to the case where the heavy recognition model is moved twice, and processing suitable for real time is made possible.

Note that the image input to the ISP 12 may be a RAW image. Further, the update unit 5 may update the sensing parameter.

Note that variations in performing weakly supervised learning are not limited. For example, if the recognizer 13 detects a position and a type in a pixel level of a person, an object, or the like, weak supervision in an image level, such as a type of an object included in an image, and the number such as two persons or one vehicle, may be given. Further, a recognition result with reduced resolution or a recognition result in units of regions may be given as weak supervision. This makes it possible to mitigate an adverse influence of the displacement of the subject.

For example, if the recognizer 13 performs key point estimation of a person, an object, a hand, an animal, a face, or the like, weak supervision in an image or region level, such as category estimation of a gesture, a posture, a facial expression, or the like, or estimation of adult, child, age, or a type of object, may be given. Further, weak supervision may be given in a state in which a plurality of key points is averaged and collected, or in a state in which a key point having large motion is excluded. In the case of position estimation of a heatmap type, weak supervision in which the resolution of output is reduced may be given. In the case of position estimation of a recurrent type, weak supervision is given as a category of a classification problem in which a position is quantized, or a loss function with a margin in which minute errors are permitted may be used. This makes it possible to mitigate an adverse influence of the displacement of the key point.

Further, in the case of supervised learning other than the weakly supervised learning, a current recognition result may be acquired from a past recognition result by prediction. For example, a current recognition result may be acquired by prediction using an optical flow, prediction using extrapolation or Kalman filter from a past recognition result, or prediction using a machine learning model such as a recurrent neural network (RNN) from a past recognition result. Further, a predicted recognition result may be used as a pseudo label for the current frame.

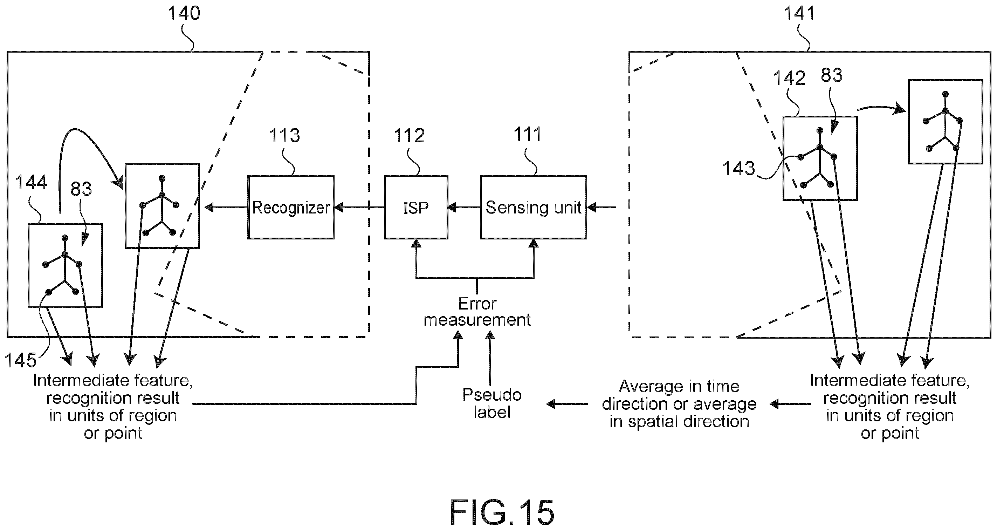

Further, in the case of key point estimation, a feature amount of a key point position may be used as a pseudo label. For example, in the case of one target (see Fig. 15), the same key point of consecutive frames may be the same target. Further, for example, intermediate features of a machine learning model at the key point position may be made identical.

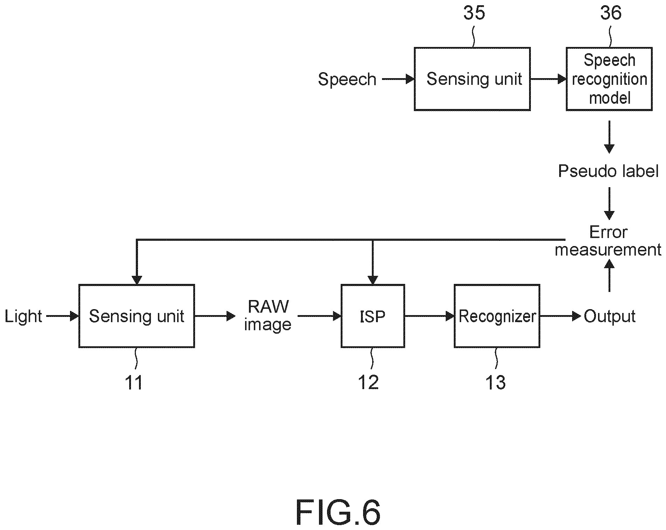

Fig. 6 is a diagram schematically showing a flow of pseudo labeling based on another modality.

In Fig. 6, a speech recognition model 36 is used as the pseudo labeling unit. As shown in Fig. 6, speech uttered by a person is acquired by a sensing unit 35, and speech data is input to the speech recognition model 36. For example, if the user pronounces "dog", the speech recognition model 36 outputs a pseudo label indicating that the speech uttered by the user is "dog".

Similarly, the sensing unit 11 generates a RAW image in which a dog is a subject. Further, the ISP 12 performs image processing on the RAW image and supplies image data to the recognizer 13.

The recognizer 13 outputs output data with respect to the input image data. For example, the recognizer 13 recognizes that the subject in the image is a dog, and a position of the dog.

The evaluation unit 4 evaluates the output data on the basis of the output pseudo label and performs error measurement. For example, the evaluation unit 4 measures an error indicating that the dog is present somewhere on the basis of the pseudo label and the output data. On the basis of the measured error output by the evaluation unit 4, the update unit 5 updates the sensing parameter and the ISP parameter so as to reduce that error.

Fig. 7 is an image diagram of update of the sensing parameter and the ISP parameter.

As shown in Fig. 7, if a subject is in a dark place, an image 40 is dark and has much noise, and further, is not suitable for recognition because of low contrast. In this case, it is conceivable that the update unit 5 updates the sensing parameter and the ISP parameter as will be described below.

For example, in the case of the sensing parameter, in order to acquire an image that is bright and has less noise, the parameter is updated to prolong an exposure time period (solid line 41). Further, for example, in order to make the image brighter, the parameter is updated to increase gain applied to an analog signal value (solid line 42). Note that the exposure time period is extremely prolonged, motion blur is increased, and a bright region is likely to be saturated. Further, if gain is increased, noise is increased, and a bright region is likely to be saturated.

For such reasons, the update unit 5 updates the sensing parameter so as to balance the brightness of the subject, the amount of noise, and the amount of blur.

For example, in the case of the ISP parameter, in denoising (Denoiser) for reducing the noise of the image, the intensity to reduce the noise is updated. In Fig. 7, a denoising parameter (Denoiser intensity) necessary in accordance with the degree of update of the sensing parameter is updated (solid line 43). Accordingly, texture or outline information necessary for recognition is retained, and noise that adversely affects recognition is reduced.

Further, in the case of tone mapping in which an input value of gamma correction or the like is mapped to another value, a parameter for determining a function shape for mapping is updated. In Fig. 7, a gradation conversion parameter is updated on the basis of the degree of update of the sensing parameter and the denoising parameter (solid line 44). This makes it possible to improve contrast of a region having a certain level of brightness and adjust brightness and darkness, and to emphasize the contrast of the region.

Note that the example shown in Fig. 7 is an example in a dark place and does not limit the update of the sensing parameter and the ISP parameter. In other words, any parameter control may be performed as long as the sensing parameter and the ISP parameter are controlled such that an error between the pseudo label and the evaluation target data is reduced (accuracy is enhanced).

Hereinafter, an example of updating the ISP parameter assumed in this embodiment will be described.

In the case of demosaicing in which the color of a position having no color data is complemented for color data acquired by thinning, each algorithm has different characteristics such as a particular outline shape, a particular pattern, being good at detailed color reproduction, being resistant to noise, and the like, and the selection of an algorithm or the parameter is updated. This suppresses the occurrence of a false color, zipper noise, artifact, and the like, which become problems in recognition.

In the case of sharpening processing for emphasizing the edges of an image, the intensity of the emphasis of the edges is updated. This makes it easier to recognize a blurred image while suppressing the influence of noise.

In the case of resolution conversion, the selection of an algorithm and the ratio of scaling of a subject are updated. This makes the subject have a size suitable for recognition while suppressing artifact.

In the case of digital gain in which a gain is applied to a digital signal value, the brightness or darkness of the image is updated. This makes it possible to obtain a brightness suitable for recognition in the case of being too bright or too dark.

In the case of color correction and color conversion to adjust the hue, a parameter of the hue such as auto white balance (AWB) is updated. This makes it possible to reduce the influence of ambient light or the like.

In the case of normalization processing in which input data is changed into a particular range or distribution, the distribution is updated so as to be easily processed, and the range of clip is updated as a parameter in order to perform revaluation or devaluation (clip) of the data out of the range. In such a manner, the outliers and unnecessary information are eliminated, and the value of the range in which the subject is present is adjusted.

In the case of quantization for reducing the number of bits representing data, the number of bits allocated is updated as a parameter. Thus, if a subject is present in a dark region, it is possible to perform control such that many bits are allocated to a range having a small value.

In the case of binning processing in which a plurality of pixels is integrated and treated as a single pixel, the range of pixels to be integrated is updated as a parameter. This makes it possible to improve sensitivity and reduce noise.

In the case of blur restoration in which lens blur or motion blur is estimated and an image before blurring is estimated, whether restoration is nicely performed or poorly performed, or how an artifact appears differs depending on the algorithm, and thus the selection of the algorithm including whether to use it or not, and the parameters are updated. Thus, the blurred image is changed into an image easily recognized without blurring while suppressing the occurrence of artifacts.

In the case of HDR rendering in which a dynamic range of data is widened by integrating images of a plurality of frames or information of a plurality of pixels, parameters prepared for each algorithm are adjusted to improve the dynamic range. This suppresses blur, reduction in resolution, and occurrence of artifacts while widening the dynamic range.

As described above, the information processing apparatus 10 according to this embodiment generates evaluation data on the basis of first output data that includes evaluation target data and is output by inputting first input data generated on the basis of the sensing parameter and the ISP parameter to the recognition unit 2, and second output data that includes a pseudo label and is output by inputting second input data to the pseudo labeling unit 3. The sensing parameter and the ISP parameter are updated on the basis of the evaluation data. This makes it possible to improve recognition accuracy.

Conventionally, the parameters optimal for sensing and recognition are different for each sensor performance, environment, or use case. For this reason, there is a problem that the output of the recognizer is different for each execution environment or the performance is deteriorated. Further, in order to improve the accuracy of image recognition, correct answer data is required, and it cannot be used in a real environment in some cases.

In the present technology, the parameter is updated to a parameter optimal for sensing on the basis of the pseudo label and the evaluation target data output from the recognition model. This eliminates the necessity to define teacher labels and parameters in advance and can further suppress the influence of erroneous detection. In other words, even in a real environment without a correct answer, the recognition accuracy can be improved.

### <Other Embodiments>

The present technology is not limited to the embodiment described above, and various other embodiments can be implemented. In the following description, description of configurations and operations similar to those of the information processing apparatus 10 described above will be omitted or simplified.

In the embodiment described above, the generation unit 1 generates the input data to be input to the recognition unit 2 (first input data) and the input data to be input to the pseudo labeling unit 3 (second input data). The present technology is not limited to the above, and a plurality of generation units that generates the first input data and the second input data may be provided.

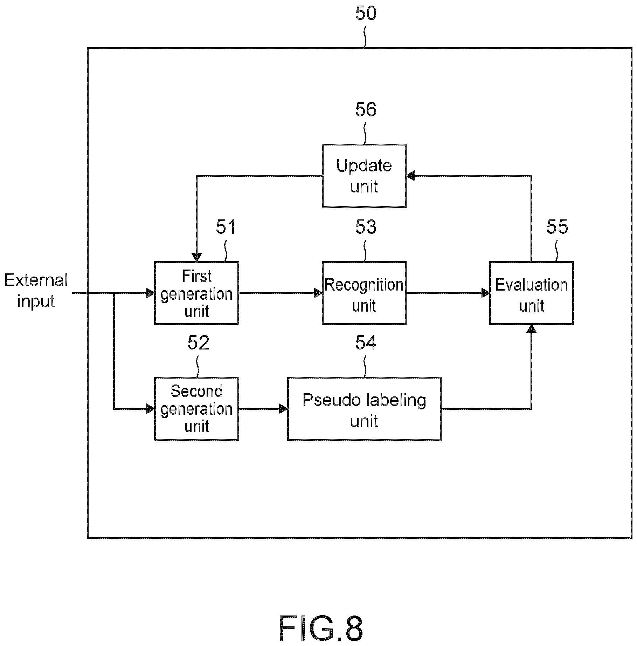

Fig. 8 is a block diagram showing another configuration example of an information processing apparatus 50.

As shown in Fig. 8, the information processing apparatus 50 includes a first generation unit 51, a second generation unit 52, a recognition unit 53, a pseudo labeling unit 54, an evaluation unit 55, and an update unit 56.

The first generation unit 51 generates first input data to be input to the recognition unit 53, with respect to an external input on the basis of a predetermined parameter.

The second generation unit 52 generates second input data to be input to the pseudo labeling unit 54, with respect to an external input on the basis of a predetermined parameter. For example, the second generation unit 52 may include an image processing unit capable of performing ISP processing with higher amount of calculation and higher functions than those of the image processing unit included in the first generation unit. Further, a RAW image having a higher amount of information may be used as the second input data to be input to the pseudo labeling unit 54.

In other words, in Fig. 8, in order to enhance the accuracy of the pseudo label, more accurate preprocessing is performed on the input data to be input to the pseudo labeling unit 54.

In the embodiment described above, the input data is generated by a single generation unit 1 with respect to a single external input. The present technology is not limited to the above, and a plurality of external inputs may be provided, or a plurality of generation units 1 that receives the external inputs may be provided.

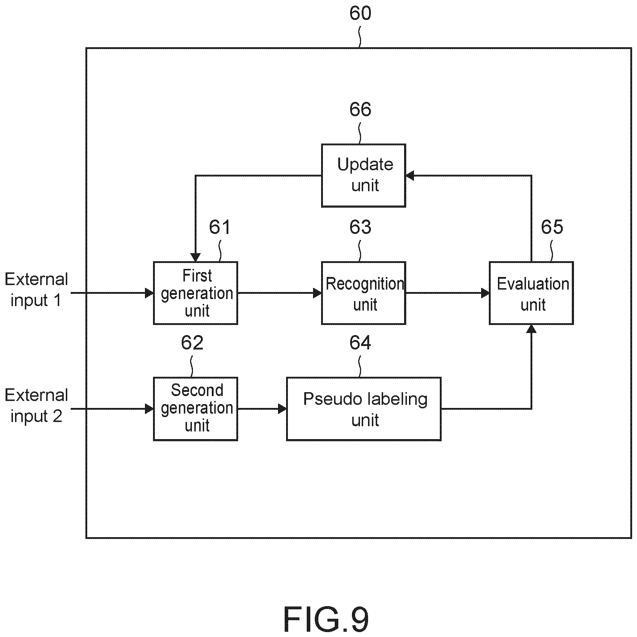

Fig. 9 is a block diagram showing another configuration example of an information processing apparatus 60.

As shown in Fig. 9, the information processing apparatus 60 includes a first generation unit 61, a second generation unit 62, a recognition unit 63, a pseudo labeling unit 64, an evaluation unit 65, and an update unit 66.

In Fig. 9, the first generation unit 61 generates first input data to be input to the recognition unit 63, with respect to an external input 1 on the basis of a predetermined parameter. Further, the second generation unit 62 generates second input data to be input to the pseudo labeling unit 64, with respect to an external input 2 on the basis of a predetermined parameter. Note that the first generation unit 61 and the second generation unit 62 may be a shared unit.

For example, as the external inputs 1 and 2, any combination of different modalities such as image data and sound, image data acquired from the camera 1, and image data acquired from a camera 2 with a different viewpoint from the camera 1 may be used.

In the embodiment described above, the evaluation unit 4 evaluates the first output data output from the recognition unit 2 on the basis of the pseudo label output from the pseudo labeling unit 3. The present technology is not limited to the above, and the first output data may be evaluated on the basis of a plurality of pseudo labels.

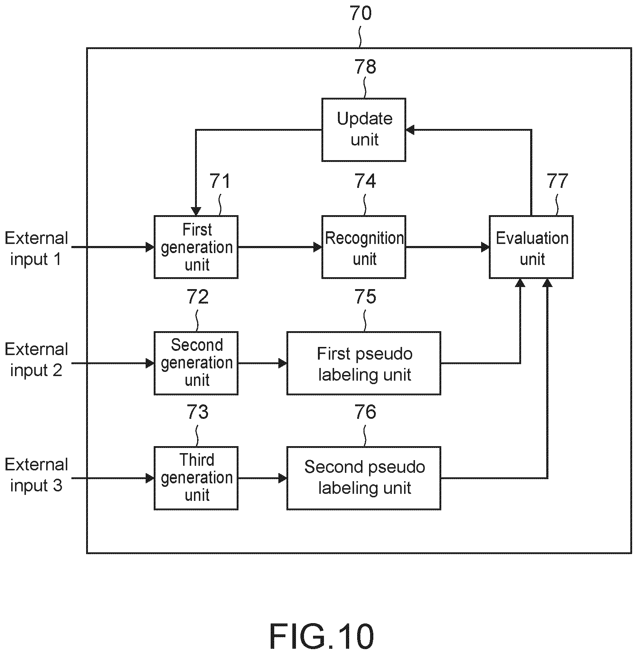

Fig. 10 is a block diagram showing another configuration example of an information processing apparatus 70.

In Fig. 10, the information processing apparatus 70 includes a first generation unit 71, a second generation unit 72, and a third generation unit 73 to which external inputs 1 to 3 are respectively input.

Further, the information processing apparatus 70 includes a first pseudo labeling unit 75 that outputs output data including a first pseudo label by inputting second input data generated by the second generation unit 72, and a second pseudo labeling unit 76 that outputs output data including a second pseudo label by inputting third input data generated by the third generation unit 73.

An evaluation unit 77 evaluates first output data output from a recognition unit 74 on the basis of the first pseudo label and the second pseudo label, and generates evaluation data including an error and accuracy.

For example, the information processing apparatus 70 is utilized in a multi-camera including a camera 1 for acquiring an external input 1, a camera 2 for acquiring an external input 2 with a viewpoint different from that of the camera 1, and a camera 3 for acquiring an external input 3 with a viewpoint different from those of the cameras 1 and 2, or in a situation in which an external input is input using a plurality of modalities.

Note that any model may be used as a labeling recognizer used in the first pseudo labeling unit 75 and the second pseudo labeling unit 76. Further, the second generation unit 72 and the third generation unit 73 may be a shared unit. Further, the number of pseudo labeling units is not limited.

### <Modified Examples>

The embodiments according to the present technology are not limited to the embodiments described above and are variously modified.

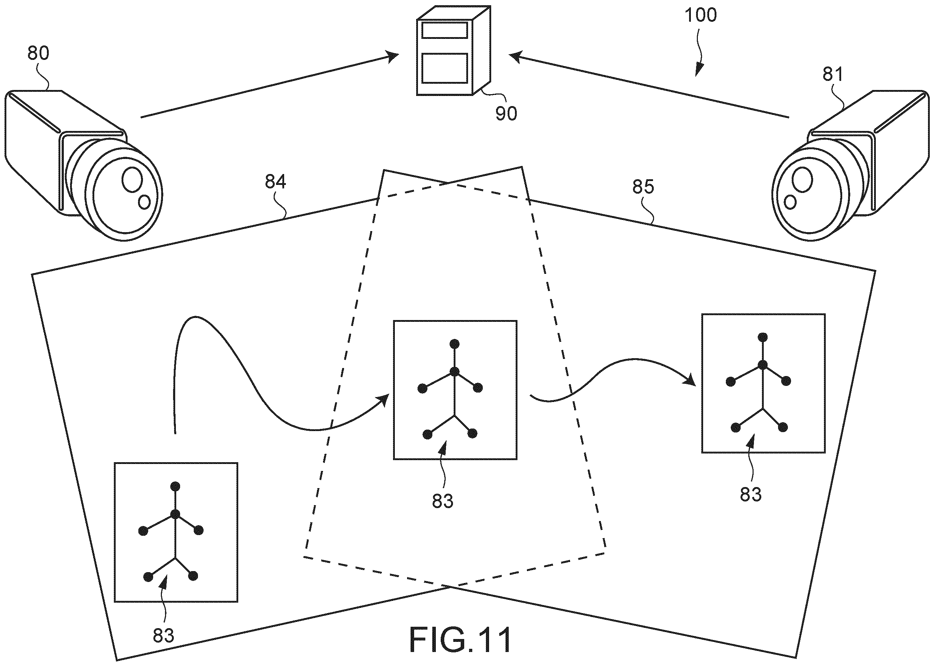

In Figs. 11 to 15, examples of an embodiment applied to a multi-camera will be described.

In image recognition in a multi-camera, a recognition result or accuracy of the same target (subject) changes due to the environment of each camera and the difference between cameras. In particular, there is a problem that the same person is recognized as a different person in applications such as personal identification and tracking.

Fig. 11 is a schematic diagram showing a practical example of an image recognition system in a multi-camera.

As shown in Fig. 11, an image recognition system 100 includes a first camera 80, a second camera 81, and an information processing apparatus 90.

In this embodiment, in the information processing apparatus 90, when a subject 83 is imaged by the first camera 80 and the second camera 81, a subject region (Bounding box) or a feature point of the subject 83 is detected and a recognition label or the like is given by the recognition model.

Further, in this embodiment, in order to obtain a correspondence relationship based on a detection result of a subject region or a feature point of a recognition label in a time direction within the camera or a correspondence relationship between the cameras, tracking by any means including the utilization of a global positioning system (GPS) or the like is used. Further, it is assumed that the subject 83 is tracked by using a GPS or a special marker or by any tracking algorithm, and the subject 83 is associated in the camera or between the cameras.

Further, the first camera 80 and the second camera 81 image different environments. For example, the first camera 80 images indoor environments, and the second camera 81 images outdoor environments. In this embodiment, the regions (regions 84 and 85) that can be imaged by the first camera 80 and the second camera 81 are classified into regions overlapping with each other (hereinafter, referred to as overlapping regions) and regions not overlapping with each other (hereinafter, referred to as non-overlapping regions).

The information processing apparatus 90 acquires image data acquired from the first camera 80 and image data acquired from the second camera 81. The information processing apparatus 90 updates a predetermined parameter such that the subject 83 imaged by the first camera 80 and the subject 83 imaged by the second camera 81 are recognized as the same subject.

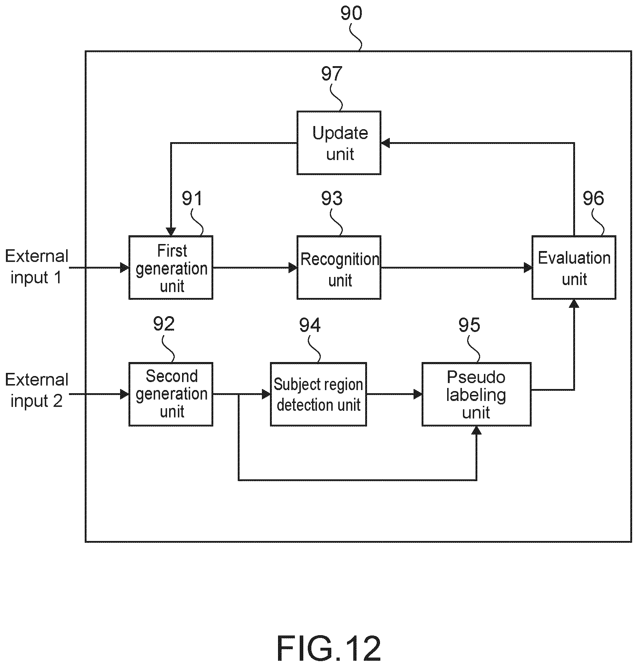

Fig. 12 is a block diagram showing a configuration example of the information processing apparatus 90.

As shown in Fig. 12, the information processing apparatus 90 includes a first generation unit 91, a second generation unit 92, a recognition unit 93, a subject region detection unit 94, a pseudo labeling unit 95, an evaluation unit 96, and an update unit 97.

The first generation unit 91 generates first input data to be input to the recognition unit 93 with respect to an external input 1 on the basis of a predetermined parameter. For example, the first generation unit 91 generates image data including the subject imaged by the first camera 80.

The second generation unit 92 generates second input data to be input to the subject region detection unit 94 and the pseudo labeling 95 with respect to an external input 2 on the basis of a predetermined parameter. For example, the second generation unit 92 generates image data including the subject imaged by the second camera 81.

The recognition unit 93 outputs first output data including evaluation target data by inputting the first input data. In this embodiment, the recognition unit 93 outputs first output data including evaluation target data on the basis of a recognition result of a subject region or a feature point, an intermediate feature, or the like.

The subject region detection unit 94 detects a subject region. Information such as the position and range of the detected subject region is supplied to the pseudo labeling unit 95. Note that any means may be used as a method of detecting the subject region. Further, if a subject is present in an overlapping region, the subject region is detected by performing calibration.

The pseudo labeling unit 95 outputs second output data including a pseudo label by inputting the information of the subject region and the second input data. In this embodiment, the pseudo labeling unit 95 performs pseudo labeling on the basis of the recognition result of the subject region or feature point or the intermediate feature.

The evaluation unit 96 generates evaluation data on the basis of the first output data that has been output from the recognition unit 93 and the second output data. In this embodiment, the evaluation unit 96 measures an error of the recognition result of the subject region or the feature point or of the intermediate feature, as the evaluation data.

The update unit 97 updates the predetermined parameter on the basis of the evaluation data such that the recognition results of the subject 83 imaged by the first camera 80 and the second camera 81 are matched with each other. In this embodiment, the update unit 97 updates at least one of the sensing parameter or the ISP parameter such that the subject region, the position of the feature point, or a recognition label is matched.

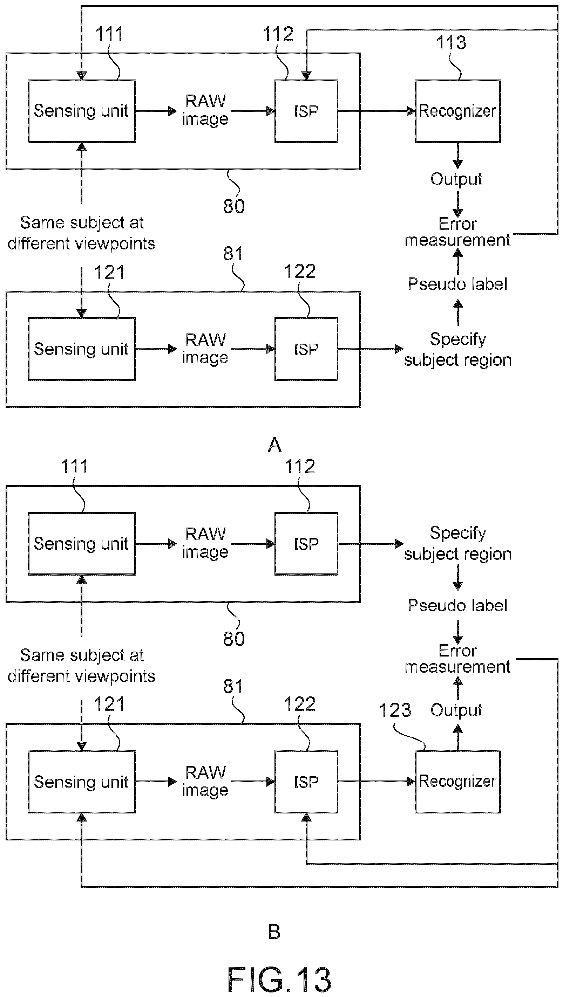

Fig. 13 is a diagram schematically showing a flow of updating the sensing parameter and the ISP parameter. A of Fig. 13 is a diagram schematically showing a flow of updating a predetermined parameter of the first camera. B of Fig. 13 is a diagram schematically showing a flow of updating a predetermined parameter of the second camera.

As shown in A of Fig. 13, the first camera 80 includes a sensing unit 111 and an ISP 112. The sensing unit 111 generates a RAW image including a subject. The generated RAW image is supplied to the ISP 112.

The ISP 112 performs image processing on the image generated by the sensing unit 111. In this embodiment, the image data (input data) subjected to the image processing performed by the ISP 112 is supplied to a recognizer 113.

Similarly, the second camera 81 includes a sensing unit 121 and an ISP 122. In this embodiment, the subject imaged by the first camera 80 and the second camera 81 is the same subject at different times and at different viewpoints. Note that when the subject is located in the overlapping region of the first camera 80 and the second camera 81, the subject to be imaged may not be imaged at different times.

A recognizer 123 outputs output data including evaluation target data, with respect to the input image data.

In A of Fig. 13, the subject region detection unit 94 detects a subject region from the image data output from the ISP 122 of the second camera 81. The pseudo labeling unit 95 performs pseudo labeling from the specified subject region.

In B of Fig. 13, the subject region is detected from the image data output from the ISP 112 of the first camera 80. Further, the pseudo labeling unit 95 performs pseudo labeling from the specified subject region.

In other words, when the predetermined parameter of the first camera 80 is updated, the data acquired by the second camera 81 is subjected to pseudo labeling. Further, when the predetermined parameter of the second camera 81 is updated, the data acquired by the first camera 80 is subjected to pseudo labeling.

The evaluation unit 96 evaluates the output data on the basis of the output pseudo label and performs error measurement. On the basis of the measured error output by the evaluation unit, the update unit 97 updates at least one of the sensing parameter or the ISP parameter such that the output of the recognizer 113 and the output of the recognizer 123 are matched with each other.

Further, in this embodiment, when the subject is located in the overlapping region, the update unit 97 updates the predetermined parameter such that the subject region, the position of the feature point, or the recognition label is matched. Further, when the subject is located in the non-overlapping region, the predetermined parameter is updated such that an average feature of the subject region or the position of the feature point is matched between the first camera 80 and the second camera 81.

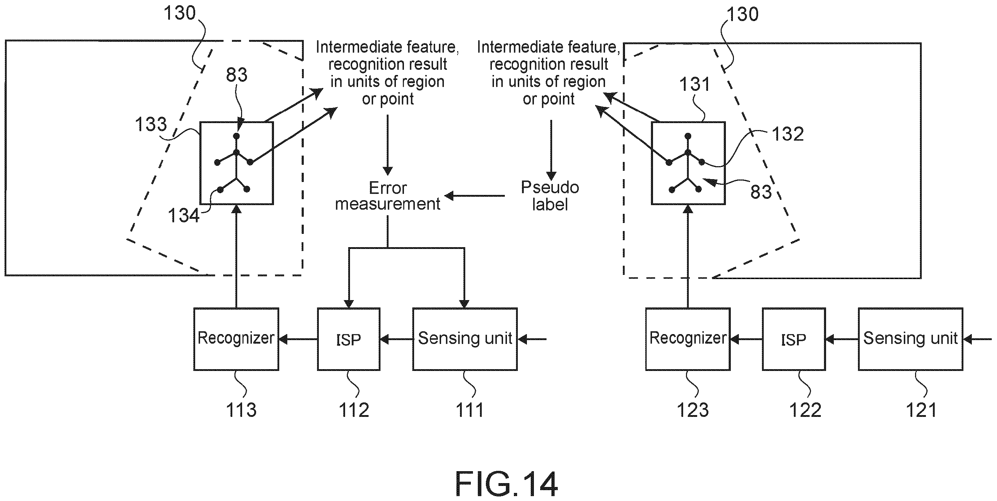

Fig. 14 is a diagram schematically showing a flow of updating the sensing parameter and the ISP parameter when the subject is located in the overlapping region.

In Fig. 14, it is assumed that calibration is performed between the first camera 80 and the second camera 81, and an accurate feature point is obtained between the first camera 80 and the second camera 81.

As shown in Fig. 14, the recognizer 123 outputs an intermediate feature or a recognition result of a subject region 131 or a feature point 132 of the subject 83 located in an overlapping region 130 on the basis of the image data acquired from the second camera 81.

Further, the pseudo labeling unit 95 outputs a pseudo label from the output intermediate feature or recognition result of the subject region 131 or the feature point 132 of the subject 83.

Similarly, the recognizer 113 outputs an intermediate feature or a recognition result of a subject region 133 or a feature point 134 of the subject 83 located in the overlapping region 130 on the basis of the image data acquired from the first camera 80.

The evaluation unit 96 evaluates output data on the basis of the output pseudo label. In this embodiment, the update unit 97 measures a distance in the recognition result of the recognizer 113 (123) or the intermediate feature of the subject 83 and updates the predetermined parameter such that both of them approach.

Further, as shown in B of Fig. 13, the predetermined parameter is similarly updated for the second camera 81. This optimizes the predetermined parameter such that the recognition results of the subject 83 (intermediate features or recognition results of the subject region 131 or the feature point 132 of the subject 83) are matched with each other.

Fig. 15 is a diagram schematically showing a flow of updating the sensing parameter and the ISP parameter when the subject is located in the non-overlapping region.

In Fig. 15, a region within the angle of view of the first camera 80 will be referred to as a first non-overlapping region 140, and a region within the angle of view of the second camera 81 will be referred to as a second non-overlapping region 141.

In the case of Fig. 15, since the subject 83 is imaged at different times and different viewpoints of camera, a perfect correspondence point cannot be obtained. Therefore, in this embodiment, the predetermined parameter is updated such that the intermediate feature or the recognition result of the subject region or the position of the feature point approaches between the first camera 80 and the second camera 81. Note that, other than the subject region or the position of the feature point, information that does not depend on the position of a recognition label or the like may be matched.

As shown in Fig. 15, an intermediate feature or a recognition result of a subject region 142 or a feature point 143 of the subject 83 located in the second non-overlapping region 141 is output from the image data acquired from the second camera 81.

In this embodiment, a pseudo label is generated by taking an average in a time direction or an average in a spatial direction with respect to the subject region 142 or the position of the feature point 143. For example, the features in the subject region 142 of a moving subject 83 may be averaged. Further, for example, the features in the time direction of the center of gravity position of the subject region 142 or the position of the feature point, or in the spatial direction around the center of gravity position of the subject region 142 or the position of the feature point may be averaged. Thus, the influence of the positions of different subjects is mitigated.

The averaged intermediate feature or recognition result of the subject region 142 or the feature point 143 is set as a pseudo label, and error measurement with respect to the intermediate feature or the recognition result of a subject region 144 or a feature point 145 of the subject 83 located in the first non-overlapping region 140 is performed from the image data acquired from the first camera 80.

The update unit 97 updates the sensing parameter and the ISP parameter on the basis of the error measurement. In this embodiment, the parameters are updated such that the subject region 144 of the subject 83 located in the first non-overlapping region 140 and the intermediate feature, and the subject region 142 of the subject 83 located in the second non-overlapping region 141 and the intermediate feature are matched with each other. Similarly, a predetermined parameter is also updated for the second camera 81. In other words, the output of the first camera 80 (subject region 144 or feature point 145) may also be used as a pseudo label.

Note that, when the predetermined parameter is updated, it may be discretionally set which one of the recognition result by the first camera 80 or the recognition result by the second camera 81 is approached. For example, it may be weighted using likelihood, or one of the sensing parameter and the ISP parameter may be fixed.

Note that the method of optimizing the predetermined parameter is not limited. For example, the technique used for the above-mentioned pseudo labeling may be applied to the recognition result.

Note that the number of cameras is not limited. Further, an error may be measured from the pseudo labels that are the recognition results by the plurality of cameras, or the pseudo labels may be integrated. In this case, the degree of reliability of the recognition result may be measured, and the error may be weighted or integrated according to the degree of reliability of the recognition.

Further, the regions (angles of view) that can be imaged by the multi-camera may not overlap with each other. In other words, only the processing in the case where the subject shown in Fig. 15 is present in the non-overlapping region may be performed.

Fig. 16 is a block diagram showing a hardware configuration example of the information processing apparatus 10.

The information processing apparatus 10 includes a CPU 201, a ROM 202, a RAM 203, an input/output interface 205, and a bus 204 that connects those components to each other. A display unit 206, an input unit 207, a storage unit 208, a communication unit 209, a drive unit 210, and the like are connected to the input/output interface 205.

The display unit 206 is, for example, a display device using liquid crystal, electro-luminescence (EL), or the like. The input unit 207 is, for example, a keyboard, a pointing device, a touch panel, or another operation device. If the input unit 207 includes a touch panel, the touch panel may be integrated with the display unit 206.

The storage unit 208 is a nonvolatile storage device and is, for example, an HDD, a flash memory, or another solid-state memory. The drive unit 210 is, for example, a device capable of driving a removable recording medium 211 such as an optical recording medium or a magnetic recording tape.

The communication unit 209 is a modem, a router, or another communication device that can be connected to a local area network (LAN), a wide area network (WAN), or the like for communicating with other devices. The communication unit 209 may communicate using wires or radios. The communication unit 209 is often used separately from the information processing apparatus 10.

The information processing by the information processing apparatus 10 having the hardware configuration as described above is implemented in cooperation with the software stored in the storage unit 208, the ROM 202, or the like, and the hardware resource of the information processing apparatus 10. Specifically, the information processing method according to the present technology is implemented when a program stored in the ROM 202 or the like and configuring the software is loaded to the RAM 203 and then executed.

The program is installed in the information processing apparatus 10, for example, through the recording medium 211. Alternatively, the program may be installed in the information processing apparatus 10 via a global network or the like. In addition, any non-transitory computer-readable storage medium may be used.

The information processing method and the program according to the present technology may be executed, and the evaluation unit according to the present technology may be constructed, by linking a computer mounted on a communication terminal with another computer capable of communicating via a network or the like.

In other words, the image recognition system, the information processing apparatus, the information processing method, and the program according to the present technology can be executed not only in a computer system including a single computer but also in a computer system in which a plurality of computers operates in conjunction with each other. Note that, in the present disclosure, a system means a collection of a plurality of constituent elements (apparatuses, modules (components), and the like), and whether or not all the constituent elements are in the same housing is not limited. Therefore, a plurality of apparatuses accommodated in separate housings and connected to each other through a network, and a single apparatus in which a plurality of modules is accommodated in a single housing are both the system.

The execution of the image recognition system, the information processing apparatus, the information processing method, and the program according to the present technology by a computer system includes, for example, both a case where the generation of input data, the generation of evaluation data, the update of a predetermined parameter, and the like are executed by a single computer and a case where each process is executed by a different computer. Further, the execution of each process by a predetermined computer includes causing another computer to execute a part or all of the processes and acquiring a result thereof.

In other words, the image recognition system, the information processing apparatus, the information processing method, and the program according to the present technology are also applicable to a configuration of cloud computing in which a single function is shared and cooperatively processed by a plurality of apparatuses through a network.

The configurations of the generation unit, the evaluation unit, the update unit, and the like; the control flow of the communication system; and the like described with reference to the respective figures are merely embodiments, and any modifications may be made thereto without departing from the spirit of the present technology. In other words, any other configurations or algorithms for the purpose of practicing the present technology may be adopted.

Note that the effects described in the present disclosure are not limitative but are merely illustrative, and other effects may be provided. The description on the plurality of effects does not mean that those effects are not necessarily exerted at the same time. It means that at least any of the effects described above is obtained depending on conditions or the like, and as a matter of course, effects not described in the present disclosure may be exerted.

At least two of the characteristic portions according to each embodiment described above can be combined. In other words, the various characteristic portions described in each embodiment may be discretionarily combined without distinguishing between the embodiments.

Note that the present technology may also take the following configurations.
(1) An information processing apparatus, including:
   a generation unit that generates input data on the basis of a predetermined parameter;
   an evaluation unit that generates evaluation data on the basis of
      first output data that includes evaluation target data and is output by inputting first input data generated by the generation unit to a first recognition model, and
      second output data that includes a pseudo label as a pseudo correct answer of the evaluation target data and is output by inputting second input data generated by the generation unit to a second recognition model; and
   an update unit that updates the predetermined parameter on the basis of the evaluation data.
(2) The information processing apparatus according to (1), in which
   the predetermined parameter includes a parameter relating to sensing and a parameter relating to processing of a sensing result.
(3) The information processing apparatus according to (2), in which
   the update unit updates at least one of the parameter relating to sensing or the parameter relating to processing of a sensing result.
(4) The information processing apparatus according to (2), in which
   the evaluation data includes an error between the evaluation target data and the pseudo label or an accuracy of the first output data based on the pseudo label.
(5) The information processing apparatus according to (4), in which
   the update unit updates at least one of the parameter relating to sensing or the parameter relating to processing of a sensing result to reduce the error.
(6) The information processing apparatus according to (4), in which
   the update unit updates at least one of the parameter relating to sensing or the parameter relating to processing of a sensing result to increase the accuracy.
(7) The information processing apparatus according to (2), in which
   the generation unit includes a sensing unit and an image processing unit,
   the sensing unit includes a complementary metal-oxide semiconductor (CMOS) image sensor or a time-of-flight (ToF) sensor, and
   the image processing unit includes an image signal processor (ISP) that performs image processing on a signal output from the sensing unit.
(8) The information processing apparatus according to (7), in which
   the parameter relating to sensing includes at least one of an exposure time period or an analog gain.
(9) The information processing apparatus according to (7), in which
   the parameter relating to processing of a sensing result is a control parameter relating to the ISP, and
   the control parameter includes at least one parameter of demosaicing, filter processing, resolution conversion, digital gain, tone mapping, color correction, color conversion, normalization processing, quantization, binning processing, blur restoration, or high dynamic range (HDR) rendering.
(10) The information processing apparatus according to (1), further including
   a database that stores a RAW image, in which
   the generation unit generates the input data with respect to the RAW image on the basis of the predetermined parameter,
   the evaluation unit generates the evaluation data on the basis of
      third output data that includes the evaluation target data and is output by inputting the input data to the first recognition model, and
      fourth output data that includes the pseudo label and is output by inputting the RAW image or the input data to the second recognition model.
(11) The information processing apparatus according to (10), in which
   the evaluation data includes an error between the evaluation target data and the pseudo label or an accuracy of the first output data based on the pseudo label, and
   the update unit updates the predetermined parameter such that the error or the number of times of update of the predetermined parameter falls within a predetermined threshold.
(12) The information processing apparatus according to (1), in which
   the evaluation unit generates the evaluation data on the basis of
   fifth output data that includes the evaluation target data and is output by inputting image data imaged at a certain time to the first recognition model, and
   sixth output data that includes the pseudo label and is output by inputting image data imaged at a time earlier than the certain time to the second recognition model.
(13) The information processing apparatus according to (1), in which
   the input data includes image data and speech data,
   the first recognition model is an image recognition model, and
   the second recognition model is a speech recognition model.
(14) The information processing apparatus according to (1), in which
   the input data includes image data and speech data,
   the first recognition model is a speech recognition model, and
   the second recognition model is an image recognition model.
(15) An information processing method that is executed by a computer system, including:
   generating input data on the basis of a predetermined parameter;
   generating evaluation data on the basis of
      first output data that includes evaluation target data and is output by inputting first input data generated by the generation unit to a first recognition model, and
      second output data that includes a pseudo label as a pseudo correct answer of the evaluation target data and is output by inputting second input data generated by the generation unit to a second recognition model; and
   updating the predetermined parameter on the basis of the evaluation data.
(16) A program that causes a computer system to execute:
   generating input data on the basis of a predetermined parameter;
   generating evaluation data on the basis of
      first output data that includes evaluation target data and is output by inputting first input data generated by the generation unit to a first recognition model, and
      second output data that includes a pseudo label as a pseudo correct answer of the evaluation target data and is output by inputting second input data generated by the generation unit to a second recognition model; and
   updating the predetermined parameter on the basis of the evaluation data.

### Reference Signs List

- 1: generation unit
- 2: recognition unit
- 3: pseudo labeling unit
- 4: evaluation unit
- 5: update unit
- 10: information processing apparatus

## Claims

1. An information processing apparatus, comprising:
a generation unit that generates input data on a basis of a predetermined parameter;
an evaluation unit that generates evaluation data on a basis of
first output data that includes evaluation target data and is output by inputting first input data generated by the generation unit to a first recognition model, and
second output data that includes a pseudo label as a pseudo correct answer of the evaluation target data and is output by inputting second input data generated by the generation unit to a second recognition model; and
an update unit that updates the predetermined parameter on a basis of the evaluation data.

2. The information processing apparatus according to claim 1, wherein
the predetermined parameter includes a parameter relating to sensing and a parameter relating to processing of a sensing result.

3. The information processing apparatus according to claim 2, wherein
the update unit updates at least one of the parameter relating to sensing or the parameter relating to processing of a sensing result.

4. The information processing apparatus according to claim 2, wherein
the evaluation data includes an error between the evaluation target data and the pseudo label or an accuracy of the first output data based on the pseudo label.

5. The information processing apparatus according to claim 4, wherein
the update unit updates at least one of the parameter relating to sensing or the parameter relating to processing of a sensing result to reduce the error.

6. The information processing apparatus according to claim 4, wherein
the update unit updates at least one of the parameter relating to sensing or the parameter relating to processing of a sensing result to increase the accuracy.

7. The information processing apparatus according to claim 2, wherein
the generation unit includes a sensing unit and an image processing unit,
the sensing unit includes a complementary metal-oxide semiconductor (CMOS) image sensor or a time-of-flight (ToF) sensor, and
the image processing unit includes an image signal processor (ISP) that performs image processing on a signal output from the sensing unit.

8. The information processing apparatus according to claim 7, wherein
the parameter relating to sensing includes at least one of an exposure time period or an analog gain.

9. The information processing apparatus according to claim 7, wherein
the parameter relating to processing of a sensing result is a control parameter relating to the ISP, and
the control parameter includes at least one parameter of demosaicing, filter processing, resolution conversion, digital gain, tone mapping, color correction, color conversion, normalization processing, quantization, binning processing, blur restoration, or high dynamic range (HDR) rendering.

10. The information processing apparatus according to claim 1, further comprising
a database that stores a RAW image, wherein
the generation unit generates the input data with respect to the RAW image on a basis of the predetermined parameter,
the evaluation unit generates the evaluation data on a basis of
third output data that includes the evaluation target data and is output by inputting the input data to the first recognition model, and
fourth output data that includes the pseudo label and is output by inputting the RAW image or the input data to the second recognition model.

11. The information processing apparatus according to claim 10, wherein
the evaluation data includes an error between the evaluation target data and the pseudo label or an accuracy of the first output data based on the pseudo label, and
the update unit updates the predetermined parameter such that the error or the number of times of update of the predetermined parameter falls within a predetermined threshold.

12. The information processing apparatus according to claim 1, wherein
the evaluation unit generates the evaluation data on a basis of
fifth output data that includes the evaluation target data and is output by inputting image data imaged at a certain time to the first recognition model, and
sixth output data that includes the pseudo label and is output by inputting image data imaged at a time earlier than the certain time to the second recognition model.

13. The information processing apparatus according to claim 1, wherein
the input data includes image data and speech data,
the first recognition model is an image recognition model, and
the second recognition model is a speech recognition model.

14. The information processing apparatus according to claim 1, wherein
the input data includes image data and speech data,
the first recognition model is a speech recognition model, and
the second recognition model is an image recognition model.

15. An information processing method that is executed by a computer system, comprising:
generating input data on a basis of a predetermined parameter;
generating evaluation data on a basis of
first output data that includes evaluation target data and is output by inputting first input data generated by the generation unit to a first recognition model, and
second output data that includes a pseudo label as a pseudo correct answer of the evaluation target data and is output by inputting second input data generated by the generation unit to a second recognition model; and
updating the predetermined parameter on a basis of the evaluation data.

16. A program that causes a computer system to execute:
generating input data on a basis of a predetermined parameter;
generating evaluation data on a basis of
first output data that includes evaluation target data and is output by inputting first input data generated by the generation unit to a first recognition model, and
second output data that includes a pseudo label as a pseudo correct answer of the evaluation target data and is output by inputting second input data generated by the generation unit to a second recognition model; and
updating the predetermined parameter on a basis of the evaluation data.
